# EUROPEAN PATENT SPECIFICATION

(11) **EP 3 052 347 B1**
(45) Date of publication and mention of the grant of the patent: **30.01.2019**
(21) Application number: 14789659.1
(22) Date of filing: 30.09.2014
(51) Int. Cl.: B60R 21/235

(54) **AIRBAG WITH SEALED SEAM**
AIRBAG MIT SIEGELNAHT
COUSSIN DE SÉCURITÉ GONFLABLE À COUTURE ÉTANCHE

(30) Priority: 30.09.2013 US 201361884269 P
(43) Date of publication of application: 10.08.2016
(73) Proprietor: Key Safety Systems, Inc., Sterling Heights, MI 48314 (US)
(72) Inventor: KALANDEK, Bruce, Dearborn, Michigan 48124 (US)
(74) Representative: Gislon, Gabriele
(86) International application number: PCT/US2014/058175
(87) International publication number: WO 2015/048705

(56) References cited:
- DE-A1- 19 852 232
- JP-A- H04 197 848
- JP-A- H05 238 342
- JP-A- 2001 001 854
- JP-A- 2010 269 710
- US-A1- 2011 012 331
- US-B1- 6 886 857
- US-B2- 8 267 423

## Description

### Field of the Invention

This invention relates to airbags generally, and more specifically, to airbags using a viscosity controlled elastomer to seal threaded seams and methods of their manufacture.

### Background of the Invention

Airbags lose inflation gases through stitched seams. This can cause the airbag to lose pressure rapidly. To compensate for this loss, often more inflation gases must be created or the leakage must be minimized.

The threaded stitching using needles leaves small, but numerous pin holes, each being a source of leakage. These holes are not sealed by the threads and under pressure can enlarge exacerbating the leakage problem. In large airbags, there can be thousands or more holes, so the accumulative air loss can be substantial.

To minimize this problem, many have attempted to use adhesive sealants applied to the airbag fabric to form seals. Some reinforce the seals with threaded stitching after the sealant is applied as in US 2011/012331. Some seal a seam with adhesive and above the seam try to reinforce with stitching as in JP 2010-269710. Some use two parallel seams of adhesive, one seam being reinforced by threads as in US 8267423. Others use coated and cured threads to reduce leakage.

None of these solutions provide a truly sealed stitched seam. There is a clear need for an airbag with sealed stitched seams and the present invention provides such a seam.

Document JP 04197848 discloses a airbag with two sheets of material joined by thread stitches being coated on both sides by a sealant.

### Summary of the Invention

According to the invention, there is provided an airbag with the features of claim 1. Preferably, the first tier and second tier material are coated with a first coating on at least a region defined by the overlap of tiers and the seam coating material is compatible with or the same as the first coating. This allows the seam coating material to bond to the first coating upon drying or curing making it virtually invisible.

The thread seam in each of the one or more rows has 12 to 20 stitches per inch (4.7 stitches per cm to 8.0 stitches per cm), preferably, the number of stitches is 14 to 18 per inch (5.5 to 7.0 stitches per cm). The threads can be coated with a coating compatible to bond with the seam coating material. The seam thread has a denier in the range of 92 to 202 preferably about 138. The seam coating material has a liquid viscosity in the range of 1 to 200,000 cP, preferably 1 to 2500 cP (as tested under ASTM D1084), more preferably about 80 cP. In some circumstances, the viscosity can range up to 2 million cP if circumstances allow for it.

In one embodiment, the first edge portion and the second edge portion of an airbag are joined at an overlapping seam by one or more rows of a sewn threaded seam having a plurality of thread stitches extending from one exterior side through to the opposite exterior side of the at least partially overlapped first and second tiers. The thread stitches on one each exterior side of the seam are coated with a viscosity controlled coating material, the seam coating material flowing between the overlapped material and through to the opposite exterior side of the seam through thread holes formed upon the creation of the seam.

Having created a structurally robust, pneumatically superior seam the invention is used in assembly airbags having intermediate seams in panels that normally do not have such seams. The use of segmented-panel airbags enables the construction of airbags having sizes that can exceed those normally created with common laser cutting equipment.

### Brief Description of the Drawings

The invention will be described by way of example and with reference to the accompanying drawings in which:
FIGs. 1 and 1A show the preferred method of applying the sealant to a sewn seam.
FIG. 2 shows another method of applying a sealant onto a threaded seam.
FIG. 2A is an illustration showing the fabric layers or tiers and the threaded stitch and sealant.
FIG. 2B is an end view of the threaded stitch taken from figure 2A.
FIG. 2C is a photograph showing a cut through a seam sealed using the present invention showing structure similar to that shown in figure 2B.
Figure 2D shows a variation of figure 2.
FIG. 3 is an exemplary airbag with sealed seams.
FIG. 3A is the exemplary airbag of figure 3 under a UV lamp to verify seam seal integrity.
FIG. 4 is an exemplary airbag having a first end and second end seam along a straight seam.
FIG. 4A is an unfolded view of the airbag of figure 4.
FIG. 5 is an alternative embodiment relative to figure 4 showing a curved seam joining the end portions.
FIG. 5A is an unfolded view of the airbag of figure 5.
FIG. 6 is an embodiment similar to figure 4, but with one or more intermediate portions seamed to the end portion using the seam of the present invention.
FIG. 6A is an unfolded view of the airbag of figure 6.
FIG. 7 is a prior art one piece airbag with no seams.
FIG. 7A is an unfolded view of the prior art airbag of figure 7.
FIGs. 8 and 8A show a final embodiment of the invention.

### Detailed Description of the Invention

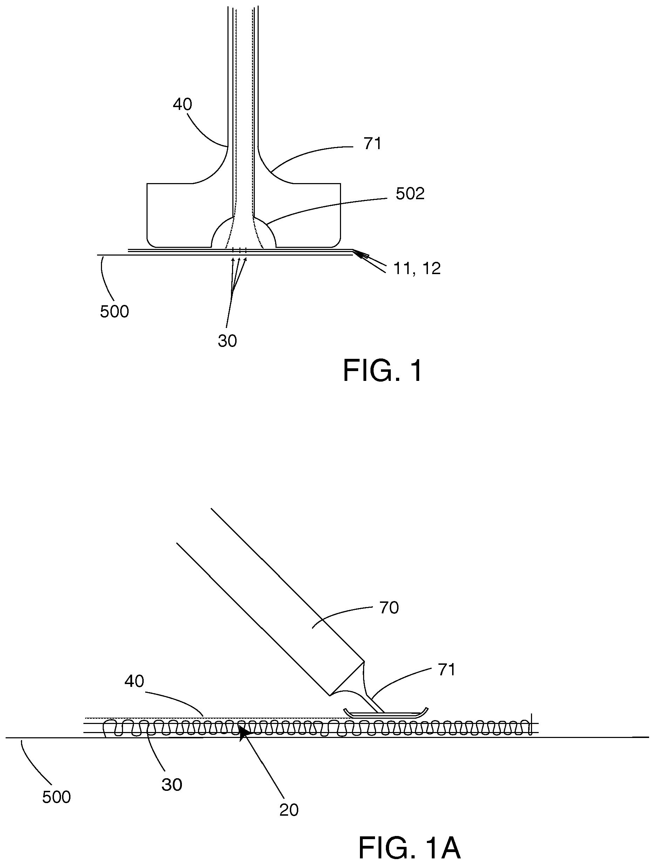

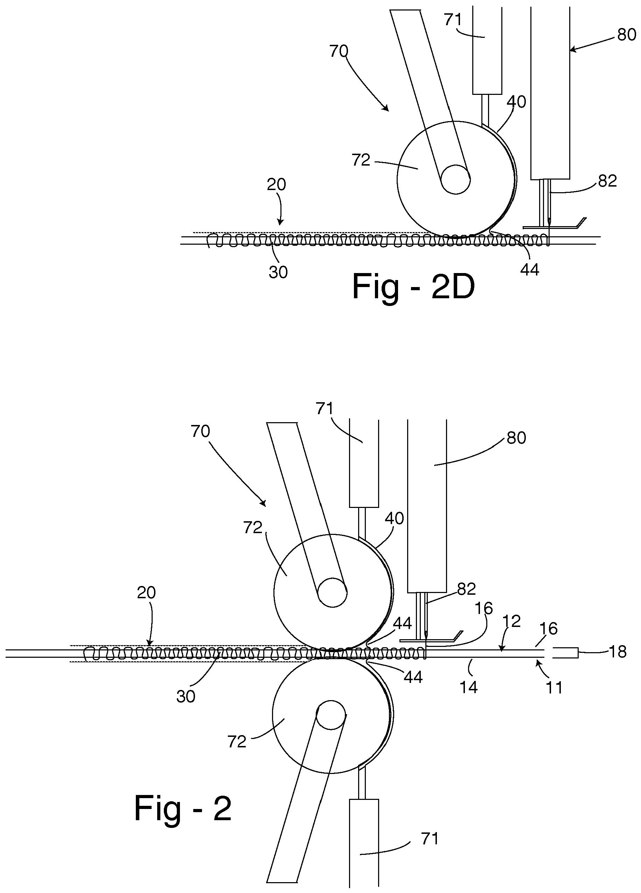

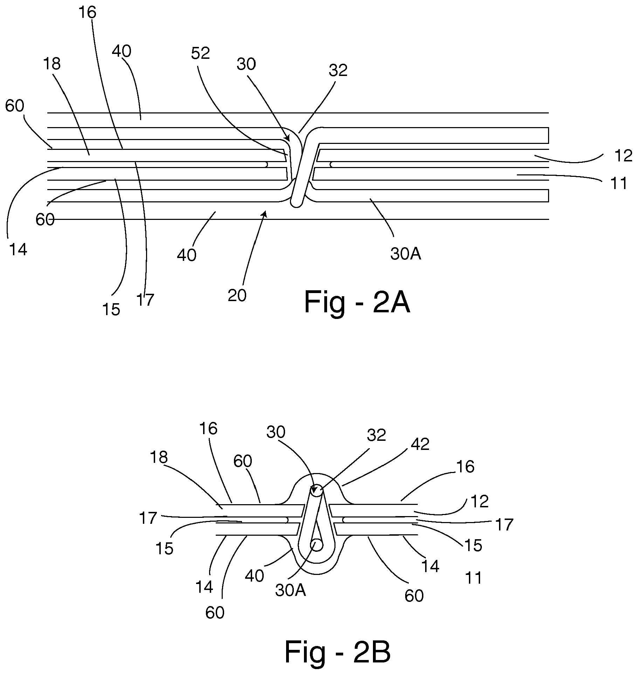

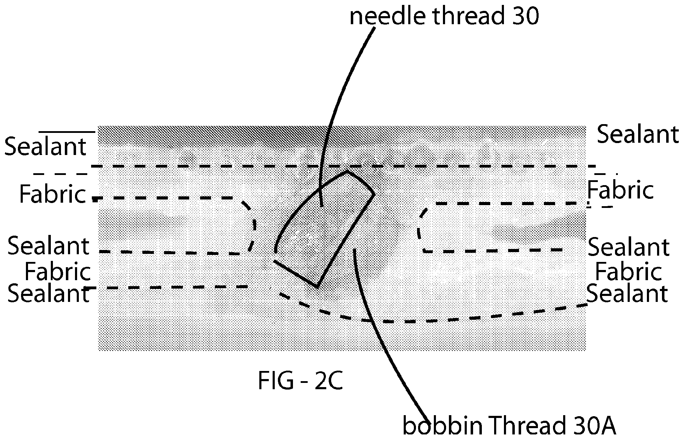

Figures 1 and 1A show a first method of applying sealant or coating material to a previously sewn seam comprising stitches 30 of a sewn seam 20 of an airbag 10. The seam can have one or a plurality of lines of stitches depending upon the required structural integrity of the seam. The airbag is shown laid flat upon a work surface 500 with a sealant applicator 70 having an applicator tip 71 positioned atop the stitches 30. The terms sealant or coating material 40 are used interchangeably herein. The sealant is forced into the applicator and exits the tip 71 and is applied to the top tier 12 of material along the top of the sewn seam. The applicator tip 71 includes a concave cavity 502 which when filled with sealant forms the sealant 40 into a bead above the stitches to be protected. The work surface 500 and applicator 70 are relatively movable one to the other. For example, the applicator 70 can be moved by a robotic arm or the work surface can be movable along X-Y axes. Both the applicator and work surface can be moved together. Upon application of the coating material 40 the material is cured by air, heat, application of a curing material which might include a water spray, other liquids, or gas including air. The viscosity of the coating material 40 is chosen sufficiently low to enable the coating material to be deposited onto the top portions of the seam on the exterior surface of the top tier of material 12. The viscosity controlled coating material will flow through the stitch holes on the top tier of material and be deposited between the two tiers 11 and 12 of material coating that portion of the seam thread between the two tiers with a portion of the coating material migrating through the stitch holes in the lower material 14 covering the seam threads on exterior surface of the lower material 14. The resultant sealed seam with coating material on the top, bottom and in between the multiple tiers of material is shown in figures 2A, 2B and 2C. Figure 2C is a photograph showing the effectiveness of the present invention with the seam coating material 40 shown encapsulating the threads 32 of the stitches 30 residing on the top of the first tier of material, extending between a first tier of material 11 and a second tier of material 12 and passing through to the exterior of the second tier of material. The sealing technique of the present invention can be used with the material 11 and 12 being coated or uncoated. In the preferred embodiment of the invention the exterior surfaces 14 and 16 of each tier of material is preferably coated with a coating material 60 such as silicon, polyvinylchloride, urethane, polyurethane, or other or elastomers, etc. prior to creating the any seam 20. The seam coating material 40 is chosen compatible with the airbag coating material 60 so that after the seam coating material 40 is applied to the airbag coating material 60 the two coating materials are capable of bonding together. For example, a typical exemplary seam would use a minimum of 25 grams/meter of coating material. One could also use a laminated coated/bonded fabric as the main panel material.

Figure 2 shows other methodologies and apparatus for applying sealant to one or both sides of the sewn seam. These methodologies can be accomplished, according to an example that does not belong to the invention, by providing one applicator 70 on the top exterior surface 16 and another applicator 70 on the bottom exterior surface 14 of the tiers of material 11, 12. Each applicator can apply seam coating material 40 respectively to the top and bottom of the stitches 30 created by a sewing head 80 positioned in front of the applicators. As previously discussed if the viscosity of the seam coating material 40 is sufficiently low, one applicator 70, as illustrated in figure 2D, can provide enough seam coating material 40 that it lies on top of the stitched seam 20 and migrates through the thread 32, resides between the tiers and migrates through thread openings 52 to reach the exterior surface 14 of the underlying first tier of material 11. In dispensing the seam coating material 40 according to the system of figure 2, a solvent dispensing tube 71 is used with a roller 72. The roller 72 has a groove 74 that is allowed to fill with coating material 40 and as the material 40 is laid into the groove 74, it forms a slight pile 44 towards the bottom as the roller 72 rolls over the respective tier of material overlapping that tier of material and the stitched seam 20.

Figure 2A shows an exemplary stitch 30 coated in accordance with the mythologies above. Stitch 30 is shown extending through the two tiers 11, 12 in the lengthwise direction. The bobbin thread 30A is also shown interwoven with the stitch 30. The seam coating material 40 is located on the exterior of each of the two tiers 11, 12 as illustrated in figure 2A and extends through and between the tiers completely sealing and encapsulating the threaded stitch 30. This is further exemplified in figure 2B wherein the first tier of material 11 and second tier of material 12 is shown with the stitch 30 having passed through pinhole openings 52 during the sewing process wherein the seam coating material 40 forms a mass of material 40 totally encapsulating the stitch 30 at the sealed seam 20. As shown in these figures, the first tier of material 11 and second tier of material 12 are shown wherein the materials 11, 12 are overlapped at the seam 20 location. It is understood that the at least one surface 14, 15 of the first tier 11 or at least one surface 16, 17 of the second tier 12 of material can be coated in this area of the seam 20 and, if so coated, it is preferable that the coating 60 of the fabric material 18 used in forming the airbag 10 is mechanically or chemically compatible with the seam coating material 40 so the two materials can bond together. By using compatible coating materials it has been found the seam coating material 40 upon drying and curing may visually blend in with the coating 60 on the fabric material 18 in such a way that it is virtually invisible to the naked eye.

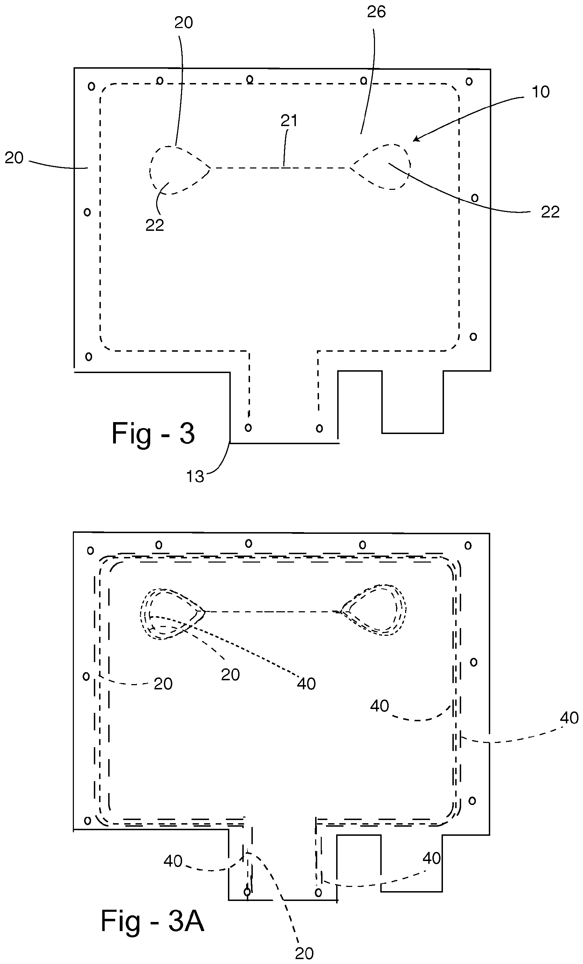

Figure 3 is an exemplary view of the airbag 10 showing a peripheral sealed stitch seam 20 extending from a neck 13 of an airbag 10 around to complete an internal chamber 26. Centered on the internal chamber 26 the opposing panels of material are joined together by a seam comprising a pair of loops 22 connected by a linear stitch line 21. Each of these stitched seams 20 can be also sealed using the techniques previously described above. As previously mentioned the coating material 60 on the tiers of material and the coating material 40 upon the seams may be similar, consequently it might not be easy to visually determine if the seam coating material has been adequately applied to the entire seam. Figure 3A is a photograph of the exemplary airbag 10 of figure 3 illuminated by a UV light. If the coating material 40 contains a UV reactive reagent, then UV light creates a black light effect wherein it is possible to see any cracks or incomplete filling of the seam coating material 40 over the stitches 30 and breaks or interruptions of the seam coating material 40 show up clearly when visualized under this ultraviolet or black light situation. As can be appreciated this is an excellent way to provide a quality assurance check to ensure the above processes create a completely sealed seam both on the top and the bottom side of the airbag 10.

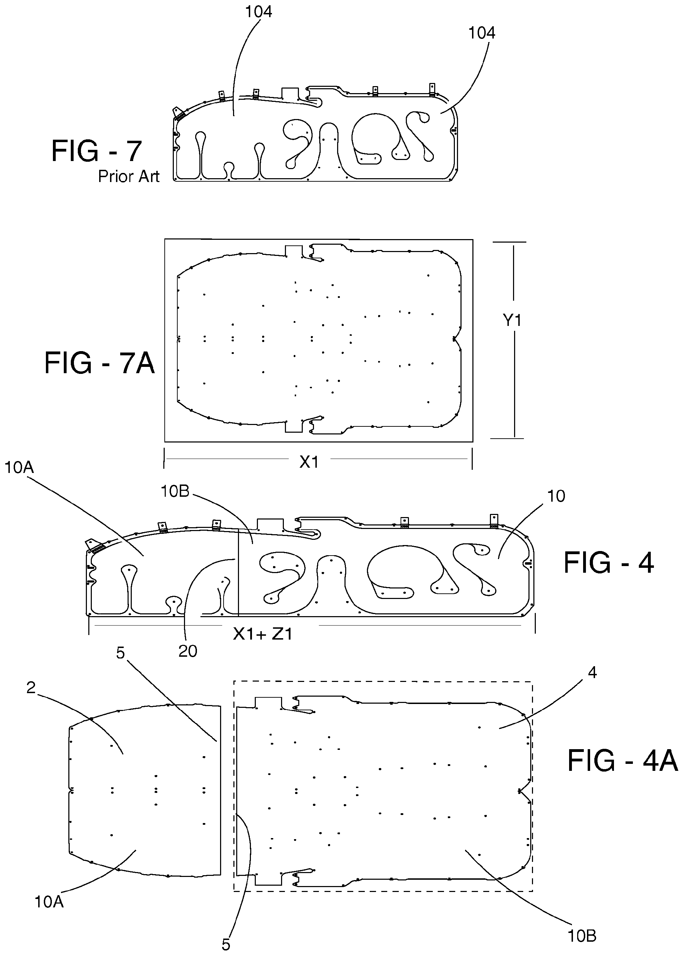

Reference is made to figure 7, which shows a prior art construction of an airbag 100. This airbag 100 has stitched seams which are applied in conventional patterns about the periphery of the bag and within the bag. These patterns 102 break up the airbag 100 into different inflatable and non-inflatable portions in a conventional way. The upper internal portion of the airbag 100 is generally open to create a continuous passageway 104 so inflation gases can pass and fill the chambers defined by the stitching or welds shown in prior art figure 7. The airbag of figure 7 is formed by folding the fabric shown in figure 7A over a centerline and then the folded fabric is sewn together. Fabric 101 is woven on a loom of a defined width and then cut to size. The loom creates in theory an infinity long length of material which is often rolled up prior to being cut. Single or multiple panels of woven material are then cut to size in accordance with the particular dimensions of the airbag under construction. The panel or panels of airbag material can be cut from the woven roll of material by hand; however, to automate the process, the woven material is moved into a laser cutting machine having a table 105 which has fixed dimensions. One or more panels of material can be cut from the roll of material at this time. One such table is shown in figure 7A. By way of illustration the illustrated piece of fabric 101 has dimensions which are generally X1 in length and Y1 in width thereby defining the largest sized single panel airbag that can be made using conventional techniques using this laser cutting machine.

An additional aspect of the present invention enables the construction of airbags made of segmented panels joined together with the seam-seal construction techniques of the present invention as well as large airbags without additional capital investment. Figure 4 shows an exemplary larger airbag 10, that is, one larger than the airbag illustrated in figure 7. Airbag 10 is made of a panel of the airbag material that is the larger than the length of the laser table 105; this panel is a segmented panel. Figure 4 shows a first panel of material 10B located to the right of seam 20 which is vertically oriented. The portion of airbag 10A to the left of seam 20 is constructed using another panel of airbag material previously cut using the laser cutting machine. Each of the panels 10A and 10B have facing edges 5 which are moved together overlapped and a seam 20 of stitches 30 is used to join these two pieces together. This seam 20 is sealed using any of the processes described above. Thereafter the now larger combined piece of material is folded over and joined together in the manner the air bag of figures 7 and 7A are joined together. As can be appreciated the resulting airbag shown in figure 4 is substantially longer than the airbag of figure 7 and is a direct result of the incorporation of the sealed seam 20.

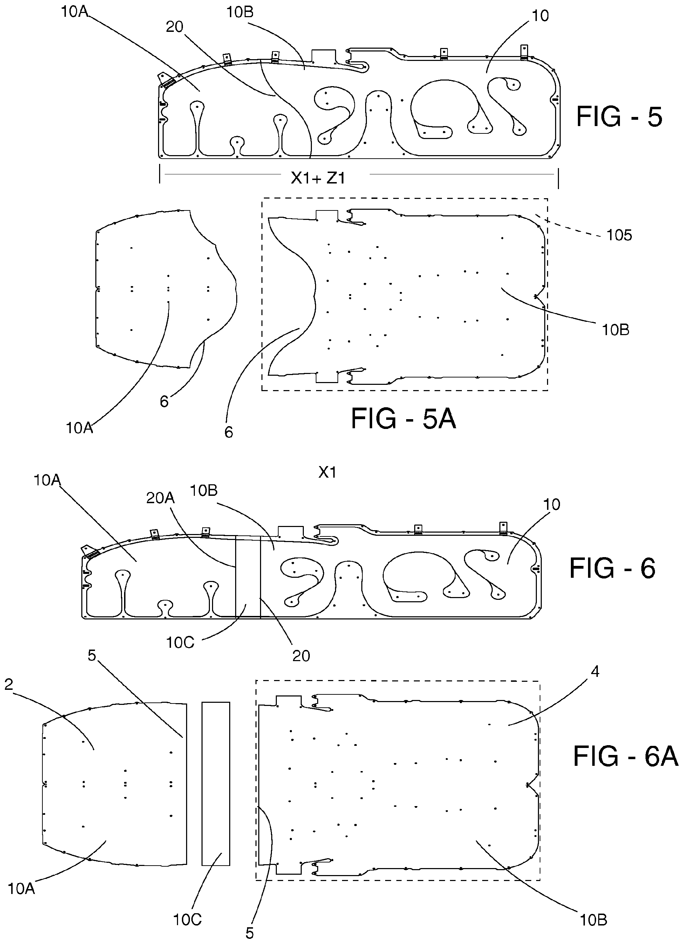

The sewn and sealed seam in figure 4 is vertically oriented however this is not a limitation of the invention. In figure 5 the seam 20 is shown arcuately shaped. To achieve the curved seam 20, the edges 6 of each of the two pieces of material are matingly curved. As can be appreciated panel 10B is sized to fit on the laser table to yield another longer airbag. Similarly, panel 10A is also correspondingly larger to mate with 10B. As before, each of the panels 10A and 10B are moved together so edges 6 overlap and a curved seam 20 of stitches 30 is used to join the these two pieces together. This seam 20 is sealed using the processes described above. Thereafter the now larger combined piece of material is folded over and joined together in the manner the airbag of figures 7 and 7A are joined together. As can be appreciated the resulting airbag shown in figure 4 is substantially longer than the airbag of figure 7. As previously mentioned the present invention can be used with airbags and panels of any size.

A further enhancement of the invention is shown in figure 6 and 6A; one or more intermediate panels 10C of airbag material 18 may be positioned between the first and second main panels 10A and 10B. When these panels 10A and 10B are joined to intermediate panel 10C an extended length multi-panel airbag is created while using the machines originally designed to manufacture smaller airbags. In such a fashion the length of an airbag can be made almost indefinitely long without ever exceeding the width or length greater than the equipment on which it will be cut or welded or a combination of both. In this embodiment panel 10B is moved to panel 10C and a first seam 20 is created and then panel 10A or moved to panel 10C and a second seam 20A is created. Both seams 20 and 20A are sealed as described above and the segmented panel is ready to be sewn to form a completed airbag as shown in figure 6. While this application may be limited to use certain minibuses and currently in even larger buses, it is contemplated that the length of this airbag can extend as long as needed by adding more intermediate portions 3 to the assembly. By using the present invention sealed stitch seams 20 wherein the stitches 30 are sealed between the overlapped tiers for the panels of material one can create an almost indefinite length of airbag material 18. This means that even large buses extending 50 to 70 feet could have a side curtain airbag extending down the entire length of the bus enhancing protection of the passengers of the vehicle. Clearly smaller versions for minibuses and executive type limousine type buses would enable the airbag system to be employed in such applications where longer than normal curtain airbags are needed.

Many of the above embodiments related to creating larger than normal airbags. However, as can be appreciated the invention encompasses any multi-panel airbag joined by the sealed seam 20 of the present invention regardless of the size of the panels.

It is important to note the threads 32 on the sealed stitch seam 20 should be of a sufficient strength to be able to withstand the internal pressure of the inflation gases. To make this happen, it is believed that the denier of the thread 32 should be in a range of 92 to 202, preferably about 138. Furthermore, it is understood that the weave of the cloth material 18 should be in an equivalent range commonly used in any curtain airbag. Typically, these airbag industry fabrics range from 210 denier all the way up to, but not exclusive to 840 denier.

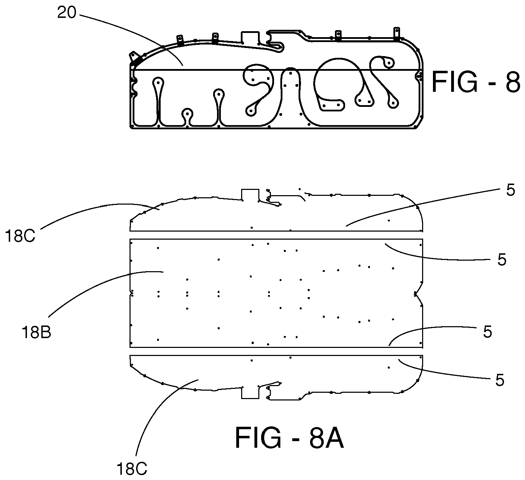

Reference is briefly made to figures 8 and 8A which show an additional embodiment of the invention. Figures 4 - 6A centered upon the manufacture of airbags that have seams that are generally vertically oriented and which could be used to create an elongated airbag. In this embodiment an airbag comprising a center panel 10D with generally horizontally extending opposing edges 5 can be widened by adding to panel 10D additional panels 10E to each of edges 5 (of panel 10D). Each panel 10E is moved to an edge 5 of panel 10D and a corresponding seam 20 sewn and thereafter sealed using the processes above. The now wider combined panel can be folded above its centerline and thereafter sewn together along various seams 20 each of which are sealed as described above creating an airbag of figure 8 having a larger dimension from its top to its bottom.

Variations in the present invention are possible in light of the description of it provided herein. While certain representative embodiments and details have been shown for the purpose of illustrating the subject invention, it will be apparent to those skilled in this art that various changes and modifications can be made therein without departing from the scope of the subject invention. It is, therefore, to be understood that changes can be made in the particular embodiments described which will be within the full intended scope of the invention as defined by the following appended claims.

## Claims

1. An airbag (10) comprising:
a first tier (11) of material;
a second tier (12) of material, the second tier (12) at least partially overlapping the first tier (11);
wherein the first and second tiers (11, 12) are joined together by one or more rows of a sewn threaded seam (20) having a plurality of thread stitches (30) extending from one exterior side (14) through to the opposite exterior side (16) of the at least partially overlapped first and second tiers (11, 12); and
wherein the thread stitches (30) are coated in each exterior side with a seam coating material (40), the seam coating material (40) being applied over the stitches (30) on one exterior side (14, 16) and flowing through to the opposite side (14, 16) through thread holes (52) formed upon the creation of the seam to encapsulate and seal the seam (20), and said seam coating material (40) is extending between the first tier of material (11) and the second tier of material (12) and passing through to the exterior of the second tier of material (12).

2. The airbag (10) of claim 1 wherein the first tier (11) and second tier (12) material are coated with a first coating (60) on at least a region defined by the overlap of tiers.

3. The airbag (10) of claim 2 wherein the seam coating material (40) is adhesively compatible with or the same as the first coating (60).

4. The airbag (10) of claim 1 wherein the seam coating material (40) bonds to the first coating (60) upon drying or curing.

5. The airbag (10) of claim 1 wherein the thread seam in each of the one or more rows has 12 to 20 stitches (30) per inch (4.7 stitches per cm to 7.0 stitches per cm), and preferably the number of stitches (30) is 14 to 18 per inch (5.5 to 7 stitches per cm).

6. The airbag (10) of claim 5 wherein the threads (32) are coated with a coating compatible to bond with the seam coating material (40).

7. The airbag (10) of claim 1 wherein the seam thread (32) has a denier in the range of 92 to 202.

8. The airbag (10) of claim 1 wherein the seam coating material (40) has a liquid viscosity in the range of 1 to 2500 cP (0.001 Pa.s to 2.5 Pa.s) (as tested under ASTM D1084).

9. An airbag (10) according to claim 1 comprising:
a first end portion (2) of the first tier (11) of material;
a second end portion (4) of the second tier (12) of material; and
wherein the first end portion (2) and the second end portion (4) are joined at an overlapping seam by one or more rows of a sewn threaded seam.

10. The airbag (10) of claim 9 wherein the joined and seamed together first and second end portions (2, 4) form an internal chamber (26, 10A, 10B), the internal chamber (26, 10A, 10B) being open at some or all of the seam (20) to form a continuous flow path for inflation.

## Patentansprüche

1. Airbag (10), umfassend:
eine erste Lage (11) eines Materials;
eine zweite Lage (12) eines Materials, wobei die zweite Lage (12) zumindest teilweise die erste Lage überlappt (11);
wobei die erste und die zweite Lage (11, 12) durch eine oder mehrere Reihen einer genähten Fadennaht (20) miteinander verbunden sind, welche eine Mehrzahl von Fadenmaschen (30) aufweist, welche sich von einer Außenseite (14) durch die gegenüberliegende Außenseite (16) der zumindest teilweise überlappenden ersten und zweiten Lage (11, 12) erstrecken; und
wobei die Fadenmaschen (30) in jeder Außenseite mit einem Nahtüberzugmaterial (40) überzogen sind, wobei das Nahtüberzugmaterial (40) über die Maschen (30) auf einer Außenseite (14, 16) aufgebracht wird und durch Fadenlöcher (52) in die gegenüberliegende Seite (14, 16) fließt, die während der Bildung der Naht geformt werden, um die Naht (20) einzukapseln und abzudichten, und wobei das Nahtüberzugmaterial (40) sich zwischen der ersten Lage des Materials (11) und der zweiten Lage des Materials (12) erstreckt und zur Außenseite der zweiten Lage des Materials (12) durchdringt.

2. Airbag (10) nach Anspruch 1, wobei die erste Lage (11) und die zweite Lage (12) von Material mit einem ersten Überzug (60) auf zumindest einem Bereich überzogen sind, welcher durch die Überlappung der Lagen definiert wird.

3. Airbag (10) nach Anspruch 2, wobei das Nahtüberzugmaterial (40) mit dem ersten Überzug (60) klebend kompatibel ist oder diesem entspricht.

4. Airbag (10) nach Anspruch 1, wobei das Nahtüberzugmaterial (40) mit dem ersten Überzug (60) beim Trocknen oder Aushärten bindet.

5. Airbag (10) nach Anspruch 1, wobei die Fadennaht in jeder der einen oder mehreren Reihen 12 bis 20 Maschen (30) pro Zoll (4,7 Maschen pro cm bis 7,0 Maschen pro cm) aufweist, und bevorzugt die Anzahl von Maschen (30) zwischen 14 und 18 Maschen pro Zoll (5,5 bis 7 Maschen pro cm) beträgt.

6. Airbag (10) nach Anspruch 5, wobei die Faden (32) mit einem Überzug überzogen sind, welcher zum Binden mit dem Nahtüberzugmaterial (40) kompatibel ist.

7. Airbag (10) nach Anspruch 1, wobei der Nahtfaden (32) einen Titer zwischen 92 und 202 aufweist.

8. Airbag (10) nach Anspruch 1, wobei das Nahtüberzugmaterial (40) eine flüssige Viskosität im Bereich zwischen 1 und 2500 cP (0,001 Pa.s bis 2,5 Pa.s) aufweist (getestet nach ASTM D1084).

9. Airbag (10) nach Anspruch 1, umfassend:
einen ersten Endabschnitt (2) der ersten Lage (11) von Material;
einen zweiten Endabschnitt (4) der zweiten Lage (12) von Material; und
wobei der erste Endabschnitt (2) und der zweite Endabschnitt (4) an einer überlappenden Naht durch eine oder mehrere Reihen einer genähten Fadennaht verbunden sind.

10. Airbag (10) nach Anspruch 9, wobei die ersten und zweiten miteinander verbundenen und aneinandergenähten Endabschnitte (2, 4) eine innere Kammer (26, 10A, 10B) bilden, wobei die innere Kammer (26, 10A, 10B) an einem Teil oder an der ganzen Naht (20) offenliegt, um einen kontinuierlichen Strömungsweg zum Aufblasen zu bilden.

## Revendications

1. Coussin de sécurité gonflable (10) comprenant :
une première couche (11) de matériau ;
une seconde couche (12) de matériau, la seconde couche (12) chevauchant au moins partiellement la première couche (11) ; dans lequel :
les première et seconde couches (11, 12) sont jointes ensemble au moyen d'une ou de plusieurs rangée(s) d'une couture par fil cousu (20) qui comporte une pluralité de points de couture par fil (30) qui s'étendent, par traversée, depuis un côté extérieur (14) jusqu'au côté extérieur opposé (16) des première et seconde couches au moins partiellement en chevauchement (11, 12) ; et
dans lequel les points de couture par fil (30) sont revêtus, au niveau de chaque côté extérieur, par un matériau de revêtement de couture (40), le matériau de revêtement de couture (40) étant appliqué au-dessus des points de couture (30) sur un côté extérieur (14, 16) et fluant, par traversée, jusqu'au côté opposé (14, 16) en passant au travers de trous de fil (52) qui sont formés suite à la création de la couture de manière à ce qu'il encapsule et étanchéifie la couture (20), et ledit matériau de revêtement de couture (40) s'étendant entre la première couche de matériau (11) et la seconde couche de matériau (12) et passant, par traversée, jusqu'à l'extérieur de la seconde couche de matériau (12).

2. Coussin de sécurité gonflable (10) selon la revendication 1, dans lequel le matériau de la première couche (11) et le matériau de la seconde couche (12) sont revêtus d'un premier revêtement (60) sur au moins une région qui est définie par le chevauchement des couches.

3. Coussin de sécurité gonflable (10) selon la revendication 2, dans lequel le matériau de revêtement de couture (40) est compatible du point de vue de l'adhésivité avec le matériau du premier revêtement (60) ou est le même que celui-ci.

4. Coussin de sécurité gonflable (10) selon la revendication 1, dans lequel le matériau de revêtement de couture (40) se lie au premier revêtement (60) suite à son séchage ou à son durcissement.

5. Coussin de sécurité gonflable (10) selon la revendication 1, dans lequel la couture par fil dans chacune des une ou plusieurs rangées comporte de 12 à 20 points de couture (30) par pouce (de 4,7 points de couture par cm à 7,0 points de couture par cm) et de préférence, le nombre de points de couture (30) est de 14 à 18 par pouce (de 5,5 à 7 points de couture par cm).

6. Coussin de sécurité gonflable (10) selon la revendication 5, dans lequel les fils (32) sont revêtus d'un revêtement qui est compatible de sorte qu'il se lie avec le matériau de revêtement de couture (40).

7. Coussin de sécurité gonflable (10) selon la revendication 1, dans lequel le fil de couture (32) présente un denier qui s'inscrit dans la plage de 92 à 202.

8. Coussin de sécurité gonflable (10) selon la revendication 1, dans lequel le matériau de revêtement de couture (40) présente une viscosité d'état liquide qui s'inscrit dans la plage qui va de 1 à 2 500 cP (de 0,001 Pa.s à 2,5 Pa.s) (tel que testé conformément à ASTM D1084).

9. Coussin de sécurité gonflable (10) selon la revendication 1, comprenant :
une première partie d'extrémité (2) de la première couche (11) de matériau ;
une seconde partie d'extrémité (4) de la seconde couche (12) de matériau ; et dans lequel :
la première partie d'extrémité (2) et la seconde partie d'extrémité (4) sont jointes au niveau d'une couture en chevauchement au moyen d'une ou de plusieurs rangée(s) d'une couture par fil cousu.

10. Coussin de sécurité gonflable (10) selon la revendication 9, dans lequel les première et seconde parties d'extrémité jointes et cousues ensemble (2, 4) forment une chambre interne (26, 10A, 10B), la chambre interne (26, 10A, 10B) étant ouverte au niveau d'une certaine partie ou de la totalité de la couture (20) de manière à former une voie de circulation continue pour le gonflage.
